Europäisches Patentamt

European Patent Office

Office européen des brevets

(19)

(11) Publication number : **0 516 430 A1**

(12) **EUROPEAN PATENT APPLICATION**

(21) Application number : **92304863.1**

(22) Date of filing : **28.05.92**

(51) Int. Cl.⁵ : **F16B 35/06**

(30) Priority : **29.05.91 JP 152283/91**

(43) Date of publication of application :
**02.12.92 Bulletin 92/49**

(84) Designated Contracting States :
**DE FR GB NL SE**

(71) Applicant : **TOPURA CO., LTD**
**2-50 Yayoicho, Higashi**
**Osaka-shi, Osaka-fu (JP)**

(72) Inventor : **Nagushi, Eiichi**
**2-47 Murata 3-chome, Chigasaki-shi**
**Kanagawa-Ken (JP)**
Inventor : **Iwasaki, Osami**
**2111-28 Minamiyana, Hatano-shi**
**Kanagawa-Ken (JP)**
Inventor : **Akashi, Tetsuya**
**395-4 Higashitawara, Hatano-shi**
**Kanagawa-Ken (JP)**

(74) Representative : **W.P. Thompson & Co.**
**Coopers Building, Church Street**
**Liverpool L1 3AB (GB)**

(54) **Drilling screw.**

(57)    Modification to the shape of the head part (6) of a drilling screw resulting in an improved insertion performance of the drilling screw during a punching operation, a fastening performance of the drilling screw when seated as well as a finishing treatment upon completion of the fastening against a fastened member.

The head part (6) comprises an upper large diameter part (13) formed with the first seat surface (12) of a frusto-conical shape whose outer circumference forms a curved concave surface and a small diameter part (15) forming a second seat surface (14) of a frusto-conical shape concentrically and integrally connected to a lower part of the large diameter part (13) and having its outer circumference formed as a curved concave surface, and an annular projecting edge (16) formed between the seated surfaces (12,14) of the two-stage curved concave surfaces.

An outer circumference of the small diameter part (15) is provided with a plurality of slot facing projections (16) extending in a longitudinal direction along the curved concave surface of the second seat surface (14).

FIG.2

This invention relates to a drilling screw, and in particular, but not exclusively, to a drilling screw for fastening a panel member such as a building wall ceiling or the like, to a base material at a main structure side.

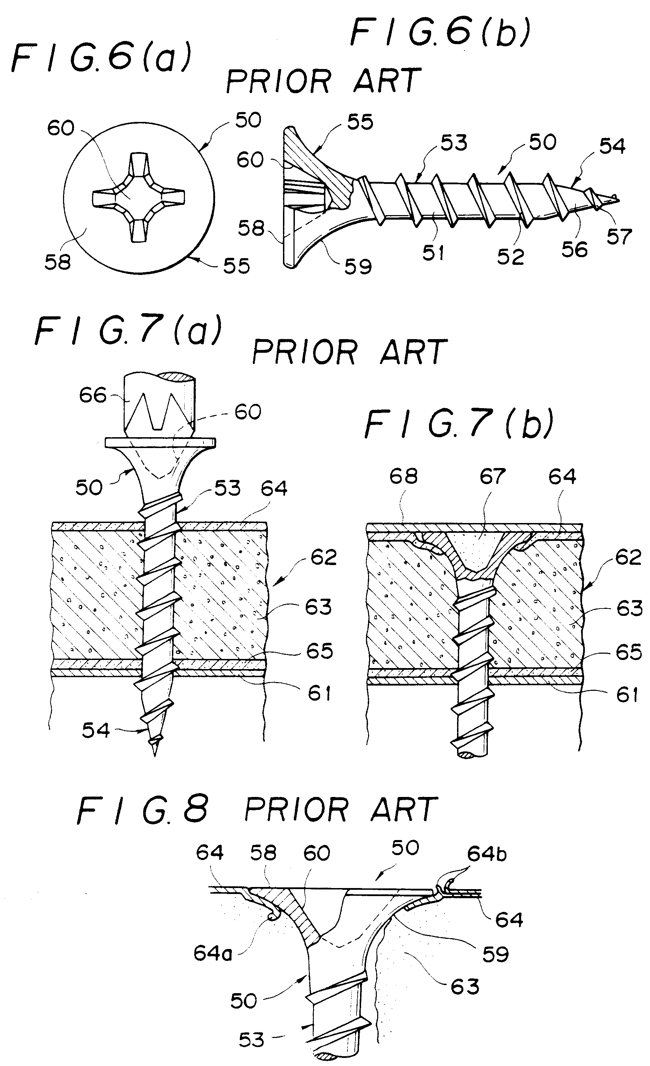

This type of drilling screw in the prior art is known as a dry wall screw and is constructed as shown in Fig.6 of the accompanying drawings. The drilling screw 50 is used for fastening a panel member such as a gypsum board 62 tensionally applied to the surface of a steel base material 61 of a light weight steel section constituting an edge of structure at a main structure side such as a building wall or a ceiling (see Fig.7).

In addition to the steel base material 61, wooden structural materials such as wood or particle board may be used and in addition to the gypsum board 62 as a panel member, materials such as plywood, hard board or a flexible board may be used.

However, the drilling screw of the present invention can be used for fastening various types of panel members to various types of base materials and is particularly suitable for fastening either a hard panel or a fragile gypsum board to a steel base material having a thin wall.

The drilling screw of the prior art type described above comprises a threaded shank part 53 having a peripheral thread 52 on a cylindrical shank part 51, a drilling part 54 contiguous with one end of the threaded part 53 and a head part 55 at the other end of the threaded shank 53.

The drilling part 54 is formed from a tapered shank part 56 which gradually decreases in diameter from the shank part 51 toward its extreme end and in external thread 57 contiguous with the thread 52, on the periphery of the tapered shank 56, wherein the fastening is carried out while the drilling part 54 co-operates with the threaded shank part 53 to perform a piercing and tapping operation.

The head part 55 has a circular flat upper surface 58 whose outer circumferential edge is concentric to and projects radially outwardly from the aforesaid shank part 51. The head part 55 has in a central part of the upper surface 58 an engaging groove 60 such as a cross-shaped hole in which a screwdriver tool can be engaged. A frusto-conical seat surface 59 of the head part 55 extends from the outer circumferential edge of the upper surface 58 to the shank part 51 and has a curved concave surface whose outer circumference gradually decreases in diameter and converges to the shank diameter of the shank 51 so as to hold the gypsum board 62 with a strong holding force upon completion of the fastening action. The entire shape of the head 55 is formed into a trumpet-shape.

The drilling screw to which the present invention pertains is not limited to a tapping screw structure as described above, but it can be applied to a screw of a self-drilling structure in which a drilling part having a drill end acting as a self-piercing action similar to that of the generally known type of drill blade is formed at an extreme end of the aforesaid threaded shank part. The drilling part performs a piercing and the thread 52 of the screw shank part 53 is subsequently applied for making a screw setting, for example, a drilling screw disclosed in the gazette of Jap.U.M.Publn.No.Hei 2-29294.

As described above, in the case that the panel member is the gypsum board 62, an additive agent is added to the gypsum of the base material and solidified into a plate form and the gypsum board is fragile, resulting in that the protective sheets 64 and 65 having superior adhering characteristic and coating characteristic, such as a cardboard, fibre or the like, are applied to both surfaces of the gypsum plate 63 with adhesive agent.

When the gypsum board 62 is to be fixed, as shown in Fig.7 (a), an extreme end of the screwdriver tool 66 is engaged in the engagement groove 60 of the drilling screw 50, the screwdriver tool 66 is rotated and the drilling part 54 of the drilling screw 50 pierces the gypsum board 62. With such an arrangement, the drill part 54 reaches the steel base material 61 while punching in sequence against the gypsum board 62, the piercing and tapping are carried out in the steel base material 61, subsequently the threaded shank part 53 is threaded into the steel base-material 61. The fastening is completed whilst, as shown in Fig.7(b), the upper surface 58 of the head part 55 is flush with the surface of the gypsum board 62 or preferably the upper surface is being slightly recessed. Then, a putty coating 67 is used to make the upper surface 58 of the head part 55 containing the engaging groove 60 flush with respect to the recessed surface of the gypsum board 62 generated at an outer circumferential edge so as to make a uniform surface. Alternatively, a paint finishing process can be used to apply mortar or a cloth applying process for applying an ornamental cloth (68) over the surface of the gypsum board 62.

However, the drilling screw 50 having the structure of the prior art has the following drawbacks.

The drilling part 54 at the extreme end of the drilling screw 50 is sharply formed in order to improve the screwing action during a piercing operation and a carbon sintering treatment is carried out for the screw and at the same time a seat surface 59 is formed as a trumpet shape so that the gypsum board 62 can be pressed with a strong holding force upon completion of the fastening work.

However, since the seat surface 59 has no cutting capability and the circumferential surface of the seat surface 59 contacts the gypsum 63 during the screwing action it can act as a substantial resistance to the screwing operation and therefore requires a substantial thrusting force (a pushing force). Therefore, the application of an excessive thrust force may cause the thread formed in the steel base material 61 to be destroyed or the screw fastened while the upper surface 58 of the head 55 is raised from the surface of the gypsum board 62.

In particular, if the steel base material 61 is thin and the gypsum board 62 is of a high hardness, even if cutting force of the drilling part 54 is improved as described above and a screwing torque for use in piercing the steel base material 61 is reduced, it becomes necessary to provide a larger thrusting force than the screwing torque for pushing the head part 55 as described above, resulting in that the thread sunk in the steel base material 61 is damaged and the drilling screw 50 runs idle. As a result, the screw is fastened with the upper surface 58 of the head part 55 raised from the surface of the gypsum board 62. A sufficient supporting force can not be attained for the gypsum board 62 and the later finishing process with an ornamental material 68 may be affected as described below.

It is preferable that a height of the upper surface 58 of the head part 55 upon completion of the fastening operation is such that it is slightly concaved from the surface of the gypsum board 62 so as to enable the concave surface to be repaired with a putty coating 67. However, the upper surface 58 of the head part 55 is raised from the surface of the gypsum board 62 due to the aforesaid reasons or the height of the upper surface 58 of the head 55 with respect to the surface of the gypsum board 62 is not made constant due to a characteristic of the steel base material 61 and the gypsum board 62 as well as a disturbance of the fastening force. Due to this fact, the upper surface 58 of the head part 55 is projected, resulting in that the projected surface can not be repaired with the putty coating 67 and even in the case of a flush surface, the metallic surface shows a poor putty application thereon and further the upper surface 58 of the flat head 55 can not receive a putty coating 67 of sufficient thickness therefore the putty coating 67 may easily be peeled off when dried. Even if a finishing process with an ornamental material 68 is carried out, some irregular corrugated portions may be generated and a uniform and superior finished surface can not be attained.

The protection sheet 64 broken by the screwing action of the drilling screw 50 is pushed into the gypsum 63 by the action of the head part 55. The protective sheet 64 is peeled off (see Fig.8), and the peeled-off partially broken piece 64a can not be pressed with the seat surface 59 but is wound around the seat surface 59 in an irregular fashion, with the, result that upon completion of the fastening operation of the screw, the seating state of the seat surface 59 is inferior and the seating is made unstable the head part 55 being inclined or raised, resulting in that the supporting force against the gypsum board 62 is reduced.

In addition, the partially bulged-out and finely split peeled piece 64b protrudes outwardly from an outer circumferential edge of the head part 55 upon completion of fastening operation. If the finishing process with the putty coating 67 or the ornamental material 68 is carried out with the peeled piece 64b in this state, then some corrugated portions are generated and a uniform and superior finished surface can not be attained, so that a quite troublesome manual operation is required for cutting the corrugated portions or grinding them off with sandpaper.

In view of the foregoing, it is an object of the present invention to provide a drilling screw capable of overcoming or alleviating these problems.

It is also an object of the present invention to provide a drilling screw to which the fitting of a screwdriver tool may be more accurately and easily performed.

It is a still further object of the present invention to provide a drilling screw in which the resistance during threading of the drilling screw is reduced and the performance of the fastening operation is improved.

It is a still further object of the present invention to provide a drilling screw in which idle rotation of a drilling screw, caused by an excessive thrust force, is alleviated of prevented and a supporting force of the drilling screw is improved.

It is an object of the present invention to provide a drilling screw in which a head part is buried in a target surface upon completion of a fastening operation and the drilling screw is suitable for finishing with a putty coating or the like.

It is also an object of the present invention to provide a drilling screw in which damages to the protective covering sheet on the target surface is prevented in order to improve the supporting force of the drilling screw.

It is also an object of the present invention to provide a drilling screw which is suitable for preventing the turning-up of the protective covering sheet on the target surface as well as preventing it being finely split and thereby reducing the surface finishing work.

In accordance with the present invention a drilling screw is provided in which the drilling screw has a threaded shank part, a drill part having a sharp or drill end at one end of the threaded shank part, a head part arranged at the other end of the threaded shank part forming a seat surface of a frusto-conical shape, with its outer periphery being a curved concave surface, wherein the upper surface of said head part has an engaging groove such as a cross-shaped hole in which a screwdriver tool can be installed, characterised in that said head part comprises a large diameter part formed at a part ranging from an outer circumferential edge of the upper surface to the threaded shank part and a small diameter part concentrically and integrally connected at a lower part of the large diameter part and formed at a part ranging from the lower part to said threaded shank part, the outer periphery of said small diameter part forming a second seat surface with a curved concave surface having a large curvature at its end nearest said large diameter part and a diameter which gradually decreases with a gradual curvature to its end nearest said threaded shank part, the diameter of the large diameter part forming the first seat surface gradually decreases toward the end of said second seat surface and has a curvature approximately equal to that of the end of said second seat surface nearest the large diameter part so as to form a seat surface with a two-stage curved concave surface with an annular projecting edge formed between said first and second seat surface.

Preferably the small diameter part of said head part is provided with a plurality of slot facing projections extending longitudinally along the curved concave surface of said second seat surface the slot facing projections being equally spaced apart about the periphery of the small diameter part with one of their ends located inside the outer circumference of said annular projecting edge.

The invention is further described, by way of example, with reference to the accompanying drawings, in which:-

Fig. 1a is a schematic plan view of the head of a first embodiment of the drilling screw constructed in accordance with the present invention;

Fig. 1b is a side view of the screw of Fig. 1a;

Fig. 2 is an enlarged longitudinal sectional view, showing the head part of the drilling screw of Fig. 1;

Fig. 3 is a partial side view of a second embodiment of the drilling screw;

Fig. 4 is a sectional view taken along a line A-A of Fig. 3;

Fig. 5a illustrates the use of the drilling screw of Fig. 1;

Fig. 5b illustrates the use of the drilling screw of Fig. 4;

Fig. 6a is a schematic plan view of the head of a drilling screw of the prior art;

Fig. 6b illustrates a side view of the screw of Fig. 6a with a part being broken away;

Fig. 7a is a schematic view for showing the insertion of the drilling screw of Fig. 6;

Fig. 7b is a schematic view showing the screw of Fig. 6 in the inserted position; and

Fig. 8 illustrates the use of the drilling screw of Fig. 6.

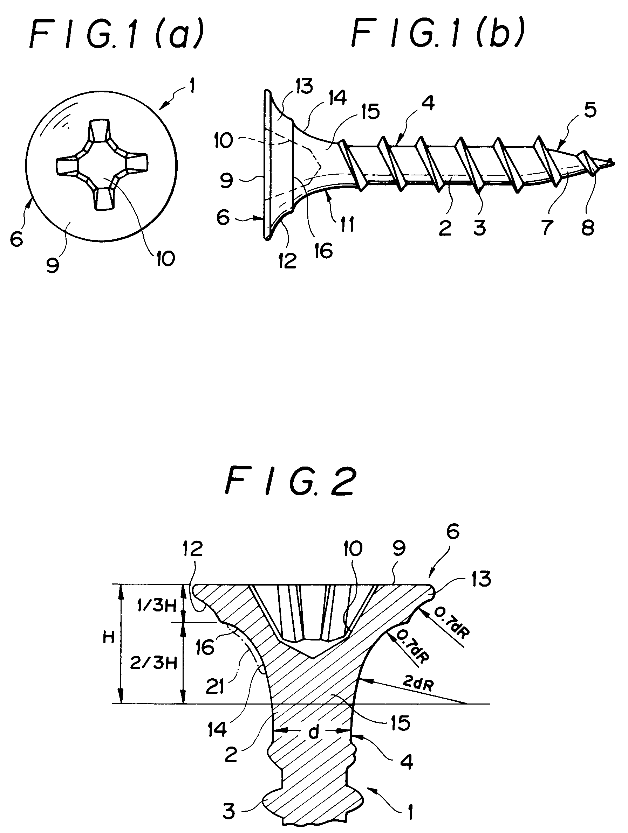

The drilling screw 1 comprises a threaded shank part 4 formed by a thread 3 on the outer periphery of a cylindrical centre part 2 as shown in Fig. 1, a drill part 5 contiguous with one end of the threaded shank part 4, and a head part 6 at the other end of the threaded shank part 4. The threaded shank part 4 is formed by a thread 8 contiguous with the thread 3 on the outer periphery of a tapered shank 7 the diameter of which gradually decreases from the shank part 4. The threaded shank part 4 and the drill part 5 have the same configuration as that of the drilling screw 50 of the prior art described above.

The head part 6 has a circular upper flat surface 9 having an outer circumferential edge projecting substantially in a radial and concentric manner from the shank part 2 as shown in Fig. 2. The central part of the upper surface 9 is provided with an engaging groove 10 such as a cross-shaped hole in which a screw driver tool can be engaged.

The head part 6 comprises a large diameter part 13 formed between an outer circumferential edge of the upper surface 9 and the threaded shank part 4, and a small diameter part 15 integrally connected to the lower part of the large diameter part 13 and extending to the threaded shank part 4.

The small diameter part 15 is of frusto-conical shape whose outer surface is concavely curved such that its diameter gradually decreases from the starting end adjacent the large diameter part 13 and terminates at the same diameter as that of the threaded shank part 4. The surface of the small diameter part 15 forms the second seat surface 14. The curved concave surface of the second seat surface 14 is formed such that its end nearest the large diameter part 13 is rapidly decreased with a small radius of curvature with a tapered angle respect to an axial direction being increased, and the end near the screw shaft part 4 is formed with a decreasing tapered angle with respect to the axial direction and its diameter is gradually decreased with a large radius of curvature.

The large diameter part 13 is formed by a curved concave surface whose diameter is reduced toward the small diameter part 15 with a radius of curvature approximately equal to that of the terminal end of the small diameter part 15. The outer circumference of the large diameter part 13 forms the first seat surface 12.

With such an arrangement, the outer circumference of the head part 6 is formed by the seat surface 11 of a two-stage curved concave surface, and an outer circumference of a connected part between the large diameter part 13 having the first seat surface 12 and the small diameter part 15 having the second seat surface 14 is formed with an annular projecting edge 16.

The head part 6 is formed such that the large diameter part 13 in this preferred embodiment is formed up to about 1/3 H with H being the height of the head part converging from the outer circumferential edge of the upper surface 9 to the outer diameter (d) of the shank part 2, and then the small diameter part 15 is substantially formed in the remaining 2/3 H.

The curved concave surfaces of the first seat surface 12 and the initial end of the second seat surface 14 are arcuate form in shape with a small radius of curvature of about 0.7 dR, i.e. about 0.7 times the outer diameter (d) of the aforesaid shank part 2, and further the curved concave surface at the terminal end of the second seat surface 14 is arcuate with a large radius of curvature of about 2dR, i.e. about two times of the outer diameter (d) of the shank part 2.

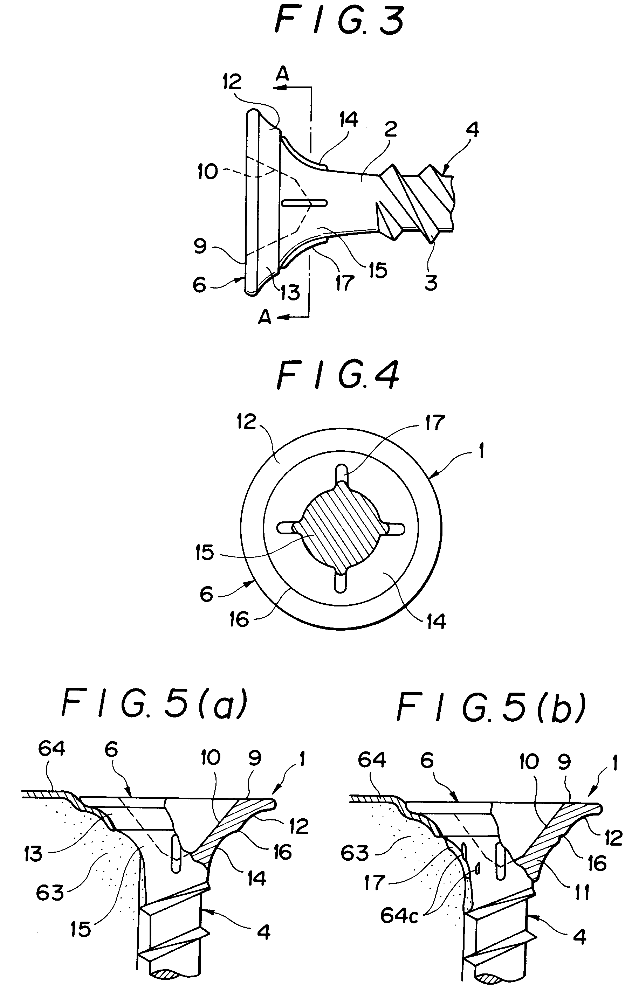

In the screw of Fig. 3 the shape of the head part 6 is further modified, wherein a plurality of slot facing projections 17 are arranged on the small diameter part 15 of the aforesaid drilling screw 1.

The slot facing projections 17 are equal spaced apart along a circumferential direction as shown in Fig. 3, for example, they are projected from an outer circumference of the small diameter part 15 with a specified height and width, and extended longitudinally along the curved concave surface of the second seat 14. The top portions of the slot facing projections 17 are positioned inside the annular projecting edge 16 in such a way as they may not be projected from an extended line at the terminal end of the aforesaid first seat surface 12 toward the outer circumference.

When the gypsum board 62 of the panel member is fastened in the same manner as that of the prior art shown in Fig. 7 with the drilling screw 1 having the aforesaid configuration, the screw may act as follows.

A tip of the rotating driver screw tool 66 is set in the engaging groove 10 formed at the upper surface 9 of the head part 6 of the drilling screw 1 and a rotational torque of the screwdriver tool 66 is transmitted to the drilling screw 1.

The drilling screw 1 rotated by the screwdriver tool 66 is operated such that the drill part 5 at its extreme end breaks through the protective sheet 64 and pierces into the gypsum board 62, wherein the gypsum plate 63 is punched in sequence and the drill part passes through the protection sheet 65, reaches a steel base material 61, performs a piercing and a tapping in the steel base material 61 and then the screw shank part 4 is threadably fitted into the steel base material 61.

In addition, the seat surfaces 12 and 14 of the head part 6 are pushed into the gypsum board 62 pierced by the threaded shank part 4 and seated and inserted while the upper surface 9 of the head part 6 is being slightly concaved from the surface of the gypsum board 62 as shown in Fig. 5(a).

In this case, the aforesaid head part 6 is operated such that an initial small diameter part 15 is pushed into the board at a fast speed, its pushing is interrupted only for a little while at the annular projecting edge 16, thereafter the large diameter part 13 is pushed into the board at a slow speed and a thrusting force is dispersed with the annular projecting edge 16 being interfaced, so that its thrusting force is less than that of the prior art drilling screw which pis inserted into the board at once.

That is, the small diameter part 15 is formed such that an initial end of the second seat surface 14 is gradually expanded along the curved concave surface and further the outer diameter at the terminal end of the second seat surface 14 subsequently pushed into the board is smaller than an outer diameter (corresponding to an outer diameter of the terminal end of the aforesaid large diameter part 13) of the head part 55 of the drilling screw 50 of the prior art. Therefore, the screw may easily be pushed into the board with a small thrust force. In addition, since the large diameter part 13 is operated such that the annular projecting edge 16 provided at the connection with the small diameter part 15 has a cutting capability and the pushing action of the screw is interrupted only whilst the annular projecting edge 16 is pushed into the board and thereafter the remaining small amount of the first seat surface 12 is pushed into the board at a slow speed whilst the screw is cutting the gypsum 63.

In this way, a thrusting force for pushing the head part 6 into the board is reduced and an unbalanced state with a screwing torque against the steel base material 61 with the drill part 5 is reduced. Thereby even if the plate thickness of the steel base material 61 is thin and the gypsum board 62 has a high hardness, it is possible to prevent the thread formed in the steel base material 61 from being damaged, the drilling screw 1 from being rotated idle and the drilling screw from being sunk whilst the upper surface 9 of the head part 6 is raised from the surface of the gypsum board 62, with the result that a sufficient supporting force can be attained against the gypsum board 62.

In addition, the aforesaid annular projecting edge 16 may effectively perform its function against a shape forming process for the protection sheet 64 with a part being broken away by the drilling screw 1.

That is, with the shape of the seat surface of the present invention, the annular projecting edge 16 cuts the protection sheet 64 which has been driven into the gypsum 63 about midway so as not to drive more of it into the gypsum, the extreme end of the cut sections are buried deep into the gypsum board 62 and at the same time the remaining protection sheet 64 does not wind around the first seat surface 12 under its non-arranged state nor is not pushed out of the outer circumferential edge of the head part or brought outwardly, with the result in that the protective sheet is uniformly expanded outwardly by the first seat surface 12.

Accordingly, the seated state of the head part 6 upon completion of the fastening operation is stabilised, a supporting force against the gypsum board 62 is improved, resulting in that cutting away of bulged out portions of the protective sheet 64 as found in the prior art or scraping it off with sandpaper can be eliminated and a finishing treatment such as putty coating 67 or ornamental material 68 can be carried out as it is and an uniform and superior finished surface.

In addition, as shown in Figs. 3 and 4, the slot facing projections 17 are projected from an outer circumference of the small diameter part 15, thereby the contact areas are remarkably reduced as compared to that of the case in which the entire circumferential surface of the screw contacts the gypsum board 62 as is the case in the prior art. Therefore, the frictional resistance is reduced and the head part 6 is pushed whilst cutting the gypsum board 62 to cause the thrusting force to be further reduced.

As shown in Fig. 5(b), the cut debrise 64c of gypsum or protection sheet or the like can be stowed in between each of the adjoining slot facing projections 17 such that it does not bulge out, resulting in that a stability of the screw whilstbeing seated can be improved.

As apparent from the aforesaid preferred embodiments, the following effects can be expected by the drilling screw of the present invention.

The head part comprises a large diameter part and a small diameter part provided with the first seat surface and the second seat surface forming the two-stage seat surfaces connected by an annular projecting edge to cause the thrusting force to be dispersed at an interface of the annular projecting edge, so that a smaller thrust than that obtained by a single pushing of the drilling screw in the prior art. The initial small diameter part is pushed into the board at a fast speed, the pushing of the screw is interrupted only for a while when cutting with the annular projecting edge is carried out, thereafter the large diameter part is pushed into the board at a slow speed, resulting in that an unbalanced state with the screwing torque with respect to the steel base material under an operation of the drilling part together with a reduced thrusting force is decreased. Accordingly, in particular, even in the event that the plate thickness of the steel base material is thin and the gypsum board is hard, the thread formed in the steel base material can be prevented from being damaged and the screw is prevented from being fastened while the upper surface of the head part is raised from the surface of the gypsum board, resulting in that a sufficient supporting force against the gypsum board can be attained.

Since the protection sheet driven into the gypsum is cut midway by the annular projecting edge formed at the seat surface, the cuts extreme end is buried deep in the gypsum board and the remaining protection sheet is expanded uniformly toward the outer circumference of the aforesaid first seat surface, resulting in that a seated state of the head part upon completion of the fastening operation is made stable, a supporting force against the gypsum board is improved, and the troublesome removal of the bulged out sections of the protection sheet of the prior art is eliminated and thus a finishing treatment with the putty coating or an ornamental material is carried out and a uniform and superior finished surface can be attained.

The slot facing projections protruding from an outer circumference of the aforesaid small diameter part may reduce a contact area with the gypsum board and thereby decrease the frictional resistance. Further the head part can be buried whilst cutting the gypsum board, resulting in that a smaller thrusting force is required and the cut debris of gypsum or protection sheet or the like are stored between each of the adjoining slot facing projections and then a stable seated state can be attained.

## Claims

1. A drilling screw in which the drilling screw has a threaded shank part (4), a drill part (5) having a sharp or drill end at one end of the threaded shank part (4), a head part (6) arranged at the other end of the threaded shank part (4) forming a seat surface (12,14) of a frusto-conical shape, with its outer periphery being a curved concave surface, wherein the upper surface (9) of said head part (6) has an engaging groove (10) such as a cross-shaped hole in which a screw driver (66) tool can be installed, characterised in that said head part (6) comprises a large diameter part (13) formed at a part ranging from an outer circumferential edge of the upper surface (9) to the threaded shank part (4) and a small diameter part (15) concentrically and integrally connected at a lower part of the large diameter part (13) and formed at a part ranging from the lower part to said threaded shank part (4), the outer periphery of said small diameter part (15) forming a second seat surface (14) with a curved concave surface having a large curvature at its end nearest said large diameter part (13) and a diameter which gradually decreases with a gradual curvature to its end nearest said threaded shank part (4), the diameter of the large diameter part (13) forming the first seat surface (12) gradually decreases toward the end of said second seat surface (14) and has a curvature approximately equal to that of the end of said second seat surface (14) nearest the large diameter part (13) so as to form a seat surface (12,14,16) with a two-stage curved concave surface with an annular projecting edge (16) formed between said first and second seat surface (12,14).

2. A drilling screw as claimed in claim 1 in which the small diameter part (15) of said head part (6) is provided with a plurality of slot facing projections (21) extending longitudinally along the curved concave surface of said second seat surface (14), the slot facing projections (21) being equally spaced apart about the periphery of the small diameter part (15) with one of their ends located inside the outer circumference of said annular projecting edge (16).

# F I G. 1 (a)

# F I G. 1 (b)

# F I G. 2

# F I G. 3

# F I G. 4

# F I G. 5 (a)

# F I G. 5 (b)

FIG.6(a)

FIG.6(b)
PRIOR ART

FIG.7(a)
PRIOR ART

FIG.7(b)

FIG.8 PRIOR ART

9

European Patent
Office

# EUROPEAN SEARCH REPORT

Application Number

EP    92 30 4863

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-2 982 166 (ROBERT W. HOBBS)<br>* the whole document *<br>--- | 1,2 | F16B35/06 |
| A | FR-A-1 331 668 (ILLINOIS TOOL WORKS INC.)<br>* the whole document *<br>--- | 1 | |
| A | FR-A-1 484 141 (BAUER &SCHAURTE)<br>* the whole document *<br>--- | 1 | |
| A | EP-A-0 268 961 (PERI-WERK ARTUR SCHWÖRER GMBH)<br>* the whole document *<br>--- | 2 | |
| A | AU-B-477 805 (DEUTSHER PROPRIETARY LIMITED)<br>* the whole document *<br>----- | 2 | |
| | | | TECHNICAL FIELDS SEARCHED (Int. Cl.5 )<br><br>F16B |

The present search report has been drawn up for all claims

| Place of search | Date of completion of the search | Examiner |
|---|---|---|
| THE HAGUE | 07 SEPTEMBER 1992 | ARESO Y SALINAS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)